# EUROPEAN PATENT SPECIFICATION

(11) **EP 2 703 601 B1**
(45) Date of publication and mention of the grant of the patent: **20.07.2016**
(21) Application number: 12182327.2
(22) Date of filing: 30.08.2012
(51) Int. Cl.: F01D 5/18, F01D 5/08, F01D 5/30, F01D 9/02, F01D 5/14

(54) **Modular Blade or Vane for a Gas Turbine and Gas Turbine with Such a Blade or Vane**
Modulare Schaufel für eine Gasturbine und Gasturbine mit der Schaufel
Aube ou ailette modulaire pour turbine à gaz et turbine à gaz avec une telle pale ou aube

(43) Date of publication of application: 05.03.2014
(73) Proprietor: ALSTOM Technology Ltd, 5400 Baden (CH)
(72) Inventor: Brandl, Herbert, 79761 Waldshut-Tiengen (DE)
(74) Representative: Bernotti, Andrea

(56) References cited:
- DE-C- 848 883
- US-A- 4 650 399
- US-B1- 7 736 131
- US-B1- 7 828 515
- US-B1- 7 866 950
- US-B1- 8 142 163
- US-B1- 8 162 617

## Description

### BACKGROUND OF THE INVENTION

The present invention relates to the technology of gas turbines. It refers to a modular blade or vane according to the preamble of claim 1. It further refers to a gas turbine with such a blade or vane.

### PRIOR ART

ever increasing hot gas temperatures in gas turbines require the use of special materials and/or designs (e.g. cooling schemes) to prevent excessive usage of cooling air. The usage of special materials and/or designs is partly done by means of inlays and/or inserts to the main structure of the part.

A near-wall cooling scheme for an airfoil of a gas turbine engine discloses the document US 5 720 431. The disclosed airfoil includes a double-wall configuration in the mid-chord region thereof with a plurality of radial feed passages defined on each side of the airfoil between an inner wall and an outer wall: A central radially extending feed chamber is defined between the two inner walls. The trailing edge of the airfoil includes a conventional single wall configuration with two outer walls defining a sequence of trailing edge passages therebetween.

Disadvantageously this airfoil provides stress conditions in the interface area between the double wall configuration in the trailing edge. In addition, the experience in this field teaches that the yield rate of such near-wall cooling schemes is not commercially viable.

Document WO 2011 058 043 A1 proposes to use inserts (special material and/or design) in parent metal to cope with the special requirements in the hot gas path of a gas turbine. Fig. 1a, which is a replica of Fig. 4 of that document, shows a modular turbine blade 10, where additional parts made of different materials are joined with a central airfoil 11, said additional parts comprising a leading edge 13, a trailing edge 15 and a blade tip 12. A buffer layer 14 may be provided between the leading edge part 13 and the central airfoil 11 for stress reduction between components with different thermal expansion coefficient.

As a result, particularly loaded regions of the blade airfoil can be differently designed with regard to materials than the remaining regions. The central airfoil 11 and the edges 13 and 15, at their lower ends, pass into a platform 16, which borders the hot gas channel and protects the blade root 17 below.

However, this known solution is based on a design where the airfoil with its root and the platform are and remain separate elements with separate mounting means. The discontinuity which is associated with the transition between the regions of different materials is exposed to the extreme temperature conditions which prevail in the region of the blade airfoil.

Document US 4 650 399 discloses a modular rotor blade for a gas turbine, assembled from a number of individual blade components. The blade comprises a root, a platform and an airfoil with a system of inner passages for a cooling medium. The airfoil consists of two main components, a carrier structure and an enclosing shell, both interconnected in a materially bonding manner, such as diffusion bonding, welding or the like. This strong coupling between components, made of different materials, effects thermal stresses during operation with the consequence of a reduced lifetime.

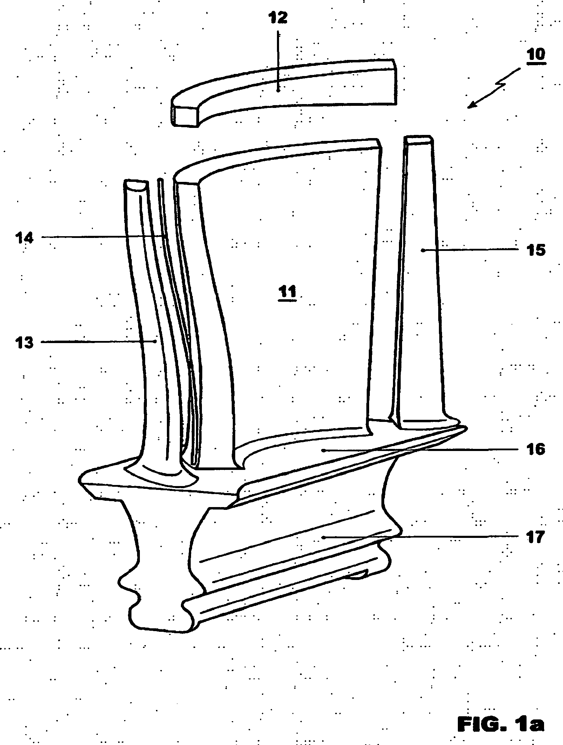

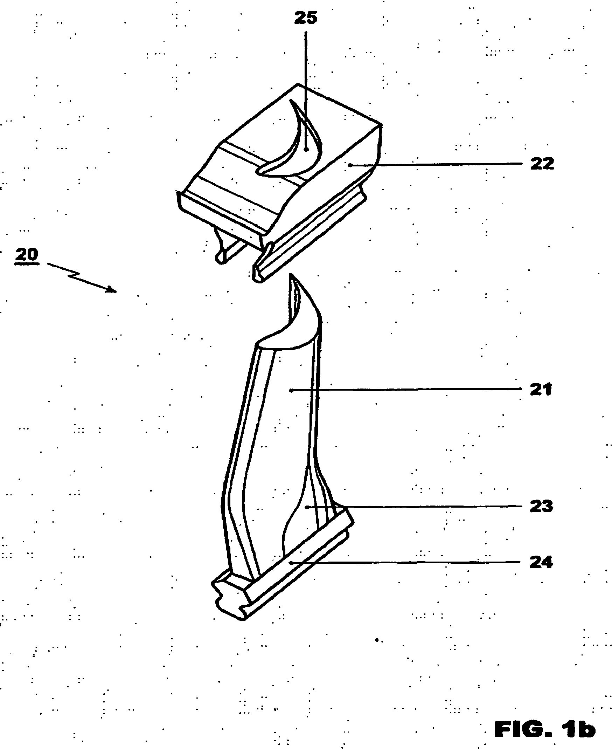

Document EP 2 189 626 A1 discloses another modular rotor blade arrangement 20, especially for a gas turbine, which can be fastened on a blade carrier and includes in each case a blade airfoil element 21 and a platform element 22, wherein the platform elements of a blade row form a continuous inner shroud. Witch such a blade arrangement, a mechanical decoupling, which extends the service life, is achieved by the blade airfoil element 21 and the platform element 22 being formed as separate elements and by being able to be fastened in each case separately on the blade carrier. According to one configuration of this arrangement (see Fig. 1b) the blade arrangement 20 comprises an aerodynamically effective airfoil 21, a shank 23 which adjoins the airfoil 21 at the bottom and is shrouded by the platform element 22, and a blade root 24 which adjoins the shank 23 at the bottom, wherein the blade root 24 is provided for fastening the airfoil element 21 on the blade carrier. The blade airfoil element 21 may be constructed of different sections consisting of different materials. For example, the leading edge and the trailing edge consist of a material which is different to that of the remaining airfoil.

The platform element 22 has a through-opening 25 through which the airfoil element 21 extends. By this means the sections which consist of different materials extend downwards into the region of the blade airfoil element which is shrouded by the platform element 22. The transition between regions of different material is then not exposed to the extreme temperature conditions which prevail directly in the region of the hot gas path. The stress level in the platform-airfoil transition region is significaritly lowered

Subject matter of document US 8162617 is a gas turbine blade with a spar and shell construction, whereby spar and shell are both tightly fixed within two platform halves, e.g. by welding. Additionally, spar and shell are interconnected by a number of complementary form-fitting elements along the longitudinal direction of the airfoil. These form-fitting elements (hooks and complementary grooves) are designed in a way allowing relative movement of the connected components in longitudinal direction.

Another embodiment of a modular gas turbine blade teaches document US 7736131. Again, the airfoil is made from a spar and shell construction, whereby the thin walled shell is formed from nanotubes, e.g. made from high-temperature resistant carbon allotropes. The two ends of the shell are connected to the spar at the platform section and at the tip section of the blade. The radially inner end of the shell is secured in a gap between two platform segments, whereas the radially other end of the shell is secured at the tip of the spar in a tight fitting manner. A wire seal placed within a groove at the spar is forced outwards against the inner surface of the shell to provide a tight seal, when the blade is rotating. The shell is fixed under a permanent tension between platform and blade tip.

### SUMMARY OF THE INVENTION

It is an object of the present invention to provide a modular gas turbine blade or vane, wherein the individual components are arranged in a way to improve the mechanical stability and integrity of the blade or vane and in addition this invention should enable an improved internal cooling of the blade or vane with a lesser amount of cooling medium.

This and other objects are obtained by means of the subject matter of the independent claims. Advantageous embodiments are given in the dependent claims.

One aspect of the invention provides a modular blade or vane for a gas turbine, which essentially comprises the modular components of:
a platform element with a planar or contoured surface defining a platform level and a through-opening therein,
an airfoil, extending through the platform element,
   the airfoil having:
   a carrying structure extending along a longitudinal axis of the airfoil, having a root portion for fastening on the blade or vane carrier of the gas turbine, having a tip portion and having at least one interior passage, extending from the root portion to the tip portion of the airfoil;
   an aerodynamically shaped shell, extending in a distance over the carrying structure and defining the outer surface of the airfoil,
   a longitudinally extending gap between the carrying structure and the shell,
   a number of through-holes in the carrying structure for directing a cooling medium from the interior passage into the gap,
      wherein
   a first joint in a region below the platform level of the platform element integrally joins the shell to said carrying structure, and
   at least one additional joint between shell and carrying structure is a form-fit joint, comprising an edge of the shell fitting into a groove, formed in a component at the tip of the airfoil, allowing relative movement in longitudinal direction between shell and carrying structure, and allowing leakage of the cooling medium into the hot gas path.

According to a first preferred aspect of the invention the first joint between shell and carrying structure is a welded joint, a brazed joint or a retainer joint.

According to an additional aspect this first joint is gastight.

According to another aspect of the invention said groove is formed in a shroud element or a tip cap.

According to a further aspect of the invention the shell is laterally fixed to the carrying structure by a number of complementary form-fitting elements on the outer surface of the carrying structure and on the inner surface of the shell between root and tip. Preferably these form-fitting elements are designed as dovetail joint.

On the one hand, this joint design allows relative movement between shell and carrying structure in longitudinal direction to compensate thermal expansion and - in case of rotating blades - expansion caused by centrifugal force. And on the other hand, this joint design avoids shell deformation in lateral direction, e.g. buckling inwards or outwards.

A cooling medium, preferably cooling air, is admitted through an inlet at the root of the carrying structure into the one or more cooling air passages inside the carrying structure. This at least one passage is extending from the root portion of the airfoil to its tip and along this passage a number of feed holes for the cooling air is arranged. The air from the interior passage flows through said holes into the gap, defined between the outer surface of the carrying structure and the inner surface of the aerodynamically shaped shell to cool the shell from inside. Preferably the air, leaving the feed holes, impinges onto the inner surface of the shelf for effective cooling.

According to an additional aspect of the invention the cooling air flows along the gap towards the tip of the airfoil and leaves the gap at the tip into the hot gas path.

In those areas of the gap, applied with cooling air, the exterior surface of the carrying structure and/or the inner surface of the shell are equipped with turbulators, for example ribs or pedestals, for enhancing heat transfer.

In addition, individual turbulators are designed to provide support to the shell and thus increase the structural integrity of the shell.

By means of this invention a modular blade or vane arrangement is created which has a couple of advantages compared to prior art solutions.

The manufacturing of a blade or vane according to the present invention is less complex and more efficient. The load carrying structure has a simple straight core being easily cast. The cooling features at its outer surface can be either cast or easily machined. This leads to significant cost savings.

Another important feature of this invention is the efficient cooling. The cooling medium, delivered with low pressure loss through the straight interior passage, flows out through feed-holes into the gap, defined between load carrying structure and shell, and passes the gap with a high yield rate of convective cooling.

In addition, the feed-holes can serve to impinge the inner wall of the shell thus additionally increasing the cooling effect with the result of an improved lifetime of the components and/or a reduced amount of cooling medium. A reduced use of cooling medium results in higher engine performance.

### BRIEF DESCRIPTION OF THE DRAWINGS

By way of example, an embodiment of the present disclosure is described more fully hereinafter with reference to the accompanying drawings, in which:
- Fig. 1a,b: show modular gas turbine blades known from the prior art (WO 2011/058043 and EP 2189626);
- Fig. 2: shows a sectional top view of a modular turbine blade or vane design suitable for the present invention;
- Fig. 3: shows a sectional side view of a modular blade according to an embodiment of the invention;
- Fig. 4a,b,c: show in detail tip fixation variants of a shell;
- Fig. 6a,b: show a sectional side view of another detail of a modular vane according to the invention.

### DETAILED DESCRIPTION OF DIFFERENT EMBODIMENTS OF THE INVENTION

Exemplary embodiments of the present invention are now described with references to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

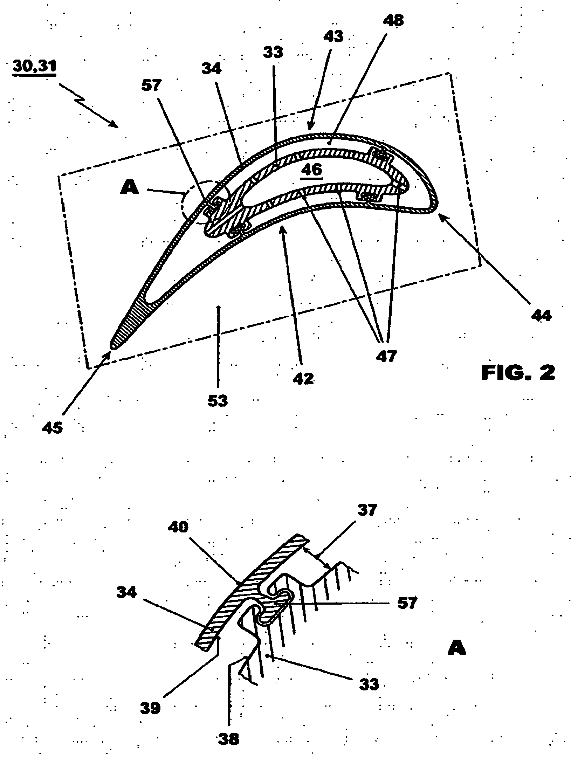

Fig. 2 shows a sectional top view of a modular gas turbine blade or vane design in accordance with the present invention. The airfoil 32 of a blade 30 or vane 31 comprises a load carrying structure 33, extending in longitudinal direction from the root portion 35 to the tip 36, and an aerodynamically shaped shell 34, extending in a distance 37 over the outer surface 38 of the carrying structure 33 and defining the outer contour 40 of the airfoil 32. The carrying structure 33 may be formed as a single unit or may be assembled from separate portions. At the tip 36 the airfoil 32 is sealed by a cap 41.

The shell 34 defines a pressure side 42, a suction side 43, a leading edge 44 and a trailing edge 45. The shell 34 may be made from a different material compared to the carrying structure 33 depending on the specification of the gas turbine. The shell 34 can be made of a single unit or can be assembled from more than one single parts, e.g. two half-shells attached to the carrying structure 33.

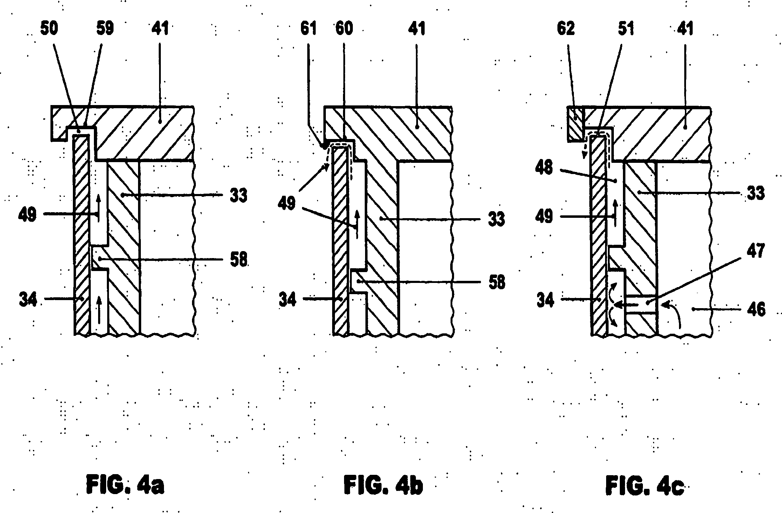

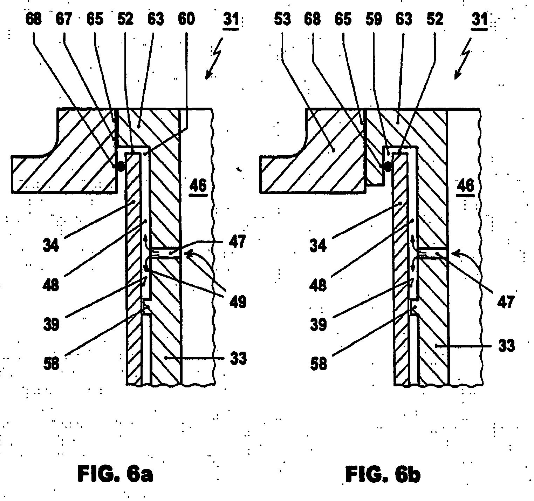

The carrying structure 33 comprises at least one inner passage 46 for conducting a flow of cooling air 49 from a reservoir in the blade or vane carrier towards the airfoil tip 36. The wall of the carrying structure 33 is equipped with a number of holes 47 connecting the at least one inner passage 46 with the gap 48 defined between the outer surface 38 of the carrying structure 33 and the inner surface 39 of the shell 34. The cooling air 49 flows out of the holes 47 into the gap 48. Preferably this air 49 serves to impinge onto the inner surface 39 of the shell 34 and to effectively cool it. Before the air 49 exits the gap 48 through exit holes 50 in the shell 34, it effects convective cooling of the shell 34 when flowing along the gap 48 towards the exit holes 50. These exit holes 50 can include film cooling holes at the pressure side 42 and/or the suction side 43 and/or the leading edge 44 and/or the trailing edge 45, or these exit holes 50 can be a clearance between an outer or inner edge 51, 52 of the shell 34 and the currying structure 33, as shown in more detail in figures 4 and 6.

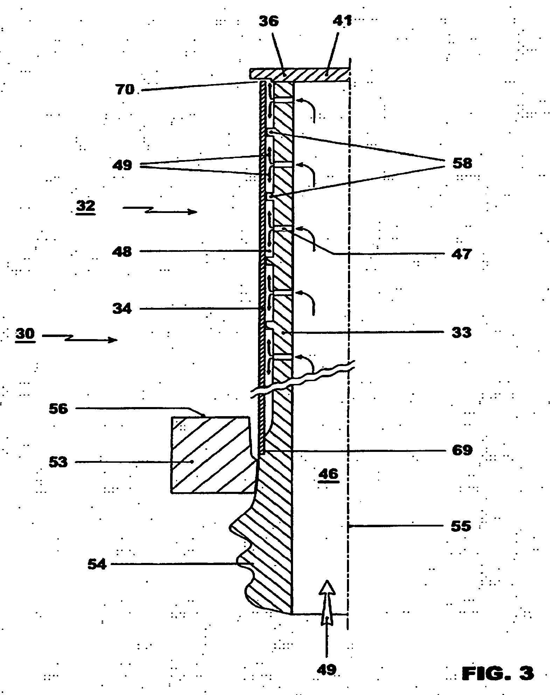

Fig. 3 shows a sectional side view of a blade 30 according to the invention. Under the platform 53 the load carrying structure 33 forms a fir tree portion 54 that fits into a complementary fir tree groove of a blade carrier of the turbomachine (not shown). The platform 53 is formed separately and joined to the load carrying structure 33 by means of welding, brazing or a retainer connection as described e.g. in US 5797725. The shell 34 extends longitudinally parallel to axis 55 from a section under the platform level 56 to the airfoil tip 36. Under the platform level 56 the shell 34 is integrally joined with the load carrying structure 33 by an appropriate joining method, such as welding, brazing etc. Thus a fixed and gas-tight joint is achieved in this section. At the airfoil tip 36 shell 34 and load carrying structure 33 are connected in a way that allows compensation of thermal expansion. Details of preferred embodiments for tip fixation are shown in figures 4a-c.

Additionally, shell 34 and load carrying structure 33 are equipped with positive locking elements to laterally support the shell 34. A dovetail connection 57, as shown in Fig. 2, supports the shell 34 and prevents its lateral deformation, but allows relative movement along the longitudinal axis 55 to compensate thermal expansion and expansion caused by centrifugal forces.

Exterior surface 38 of the load carrying structure 33 and/or interior surface 39 of the shell 34 are equipped with turbulators 58, such as ribs, for increasing the heat transfer between the shell (34) and the cooling medium 49.

In addition, the height of individual turbulators 58 may correspond to the width 37 of the gap 48. In doing so, these turbulators 58 act as a mechanical stop (distance holder) and prevent inward deformation of the shell 34, particularly at the pressure side 42 of the airfoil 32.

Fig. 4a, b, c show details of preferred embodiments for shell 34 fixation at the airfoil tip 36 allowing relative movement betwee the shell 34 and the load carrying structure 33. As mentioned above, the exposure of the individual components of the modular blade or vane to thermal expansion and - in case of rotating blades - to centrifugal forces requires a fixation of the shell 37. with clearance in longitudinal direction at one end.

In case of a rotating blade the fixed joint of the shell 34 has to take up the centrifugal forces. From this reason the fixed joint between shell 34 and carrying structure 33 is achieved in the root section 35, whereas at the airfoil tip 36 the shell 34 and the load carrying structure 33 are connected in a way that allows relative movement. As a consequence of this arrangement the shell 37 is subject to tension during rotation of the blade 30 and thereby additionally stabilized against deformation, such as buckling.

According to Fig. 4a the shell 34 ends in a groove 59 at the lower side of a tip component 41. Such a component 41 may be, for example, a tip cap or a shroud element. Depth and width of the groove 59 are sized so that a leakage of cooling medium 49 is possible. The contour of the groove 49 may be machined by any appropriate machining method.

An alternative embodiment of fixation of shell 34 at the airfoil tip 36 is shown in Fig. 4b. At the tip 36 the load carrying structure 33 broadens to the outer contour of the airfoil 32 thereby overlapping the upper edge 51 of the shell 34. At the lower side of this overlapping part 63 a shoulder 60 is machined so that the upper edge 51 fits into this shoulder 60. A surrounding weld seam 61 at the outer edge of the shoulder 60 locks the shell 34 in its position.

Fig.4c shows another variant of a tip fixation. The shoulder 60 at the lower side of a tip component 41, e.g. the shroud element, is limited outwards by a stop bar 62.

Figure 6 shows sectional side views of a vane 31 according to the invention. Fig. 6a und b disclose two arrangement variants of the carrying structure 33, the shell 34 and the platform 53 at the inner diameter of the vane 31.

According to Fig. 6a the inner edge 52 of shell 34 fits into the shoulder 60 or carrying structure 33. At the outer lateral surface 65 of an overlapping part 63 of the carrying structure 33 the platform 53 is connected to the airfoil 32. The size of platform 53 exceeds the size of the overlapping part 63 of the carrying structure 33 thus forming a groove in which the shell 34 ends. An optional seal 68 between airfoil shell 34 and platform 53 prevents the penetration of hot gases from the hot gas path into this groove.

According to Fig. 6b the overlapping part 63 of the carrying structure 33 is broader, compared to the example of Fig. 6a, and the inner edge 52 of the airfoil shell 34 ends in a groove 59, machined into the overlapping part 63. Optionally a seal 68 may be arranged to prevent the penetration of hot gases into the groove 59. The platform 53 is connected to the outer lateral surface 65 of the currying structure 33 by any suitable method.

### LIST OF REFERENCE NUMERALS

- 10: turbine blade/vane
- 11: airfoil
- 12: blade tip
- 13: leading edge
- 14: buffer layer
- 15: trailing edge
- 16: platform
- 17: root
- 20: turbine blade
- 21: airfoil
- 22: platform-element
- 23: shank
- 24: root
- 25: through-opening
- 30: blade
- 31: vane
- 32: airfoil
- 33: carrying structure
- 34: shell
- 35: root
- 36: tip
- 37: distance between 33 and 34
- 38: outer surface of 33
- 39: inner surface of 34
- 40: outer contour of 32
- 41: tip component, e.g. cap
- 42: pressure side
- 43: suction side
- 44: leading edge
- 45: trailing edge
- 46: inner passage in 33
- 47: through-holes for cooling medium
- 48: gap
- 49: cooling medium
- 50: exit holes
- 51: outer edge of 34
- 52: inner edge of 34
- 53: platform
- 54: fir tree
- 55: longitudinal axis of the airfoil
- 56: platform level
- 57: dovetail
- 58: turbulator
- 59: groove
- 60: shoulder
- 61: weld seam
- 62: stop bar
- 63: overlapping part of 33
- 64: lateral surface of 34
- 65: outer lateral surface of 33
- 66: through-opening
- 67: lateral surface in 66
- 68: seal
- 69: first joint
- 70: additional joint

## Claims

1. A modular blade (30) or vane (31) for a gas turbine which comprises the modular components of:
a platform element (53) with a planar or contoured surface defining a platform level (56) and a through-opening (66) therein, and
an airfoil (32), extending through the platform element (53),
wherein the airfoil (32) having:
a load carrying structure (33) extending along a longitudinal axis (55) of the airfoil (32), having a root portion (35) for fastening on a blade or vane carrier of the gas turbine, having a tip portion (36), and having at least one interior passage (46), extending from the root portion (35) to the tip portion (36) of the airfoil (32), an aerodynamically shaped shell (34) extending in a distance (37) over the carrying structure (33) and defining the outer contour (40) of the airfoil (32), a longitudinally extending gap (48), defined between the carrying structure (33) and the shell (34),
a number of through-holes (47) in the carrying structure (33) for directing a cooling medium (49) from the interior passage (46) into the gap
the shell (34) being integrally joined to said carrying structure (33) by a first joint in a region below the platform level (56) of the platform element (53); and the shell (34) being joined to the carrying structure (33) by at least one additional joint, **characterized in that** said at least one additional joint is a form-fit joint, comprising an edge (51, 52) of the shell (34) fitting into a groove (59), formed in a component (41) at the tip (36) of the airfoil (32), allowing relative movement in longitudinal direction between shell (34) and carrying structure (33) and allowing leakage of the cooling medium (49) into the hot gas path.

2. The modular blade (30) or vane (31) according to claim 1, wherein the first joint between shell (34) and carrying structure (33) is a welded joint, a brazed joint or a retainer joint.

3. The modular blade (30) or vane (31) according to claim 1 or 2, wherein the first joint between the shell (34) and the carrying structure (33) is gastight.

4. The modular blade (30) or vane (31) according to claim 1, wherein said tip component (41) is a shroud element or a tip cap.

5. The modular blade (30) or vane (31) according to claim 1, wherein the groove (59) is machined in the tip component (41) of the airfoil (32).

6. The modular blade (30) or vane (31) according to claim 1, wherein the outer surface (38) of the carrying structure (33) and the inner surface (39) of the shell (34) are equipped with a number of complementary form-fitting elements for lateral fixation of the shell (34) to the carrying structure (33).

7. The modular blade (30) or vane (31) according to claim 6, wherein the complementary form-fitting elements are designed as a dovetail.

8. The modular blade (30) or vane (31) according to claim 1, wherein the cooling medium (49), directed into gap (48), impinges the inner surface (39) of the shell (34).

9. The modular blade (30) or vane (31) according to claim 1, wherein the outer surface (38) of the carrying structure (33) and/or the inner surface (39) of the shell (34) are equipped with turbulators (58) for enhancing heat transfer.

10. The modular blade (30) or vane (31) according to claim 9, wherein the turbulators (58) are ribs or pedestals.

11. The modular blade (30) or vane (31) according to claim 9 or 10, wherein individual turbulators (58) are designed to provide support to the shell (34).

## Patentansprüche

1. Modulares Blatt (30) oder modulare Schaufel (31) für eine Gasturbine, welche die folgenden modularen Bestandteile aufweist:
ein Plattformelement (53) mit einer ebenen oder konturierten Oberfläche, die eine Plattformebene (56) bildet, und einer darin befindlichen Durchgangsöffnung (66), und
ein Flügelprofil (32), welches durch das Plattformelement (53) verläuft,
wobei das Flügelprofil (32) enthält:
eine Lasttragstruktur (33), die sich entlang einer Längsachse (55) des Flügelprofils (32) erstreckt, einen Fußteil (35) zur Befestigung an einem Blatt- oder Schaufelträger der Gasturbine hat, einen Spitzenteil (36) hat und mindestens einen inneren Kanal (46) hat, der sich von dem Fußteil (35) zu dem Spitzenteil (36) des Flügelprofils (32) erstreckt, eine aerodynamisch geformte Schale (34), die in einem Abstand (37) über der Tragstruktur (33) verläuft und eine äußere Kontur (40) des Flügelprofils (32) bildet, einen in Längsrichtung verlaufenden Spalt (48), der zwischen der Tragstruktur (33) und der Schale (34) gebildet ist,
eine Anzahl von Durchgangslöchern (47) in der Tragstruktur (33), um ein Kühlmedium (49) von dem inneren Kanal (46) in den Spalt (48) zu leiten,
wobei die Schale (34) mit der Tragstruktur (33) durch eine erste Verbindung in einem Gebiet unter der Plattformebene (56) des Plattformelements (53) einstückig verbunden ist; und die Schale (34) mit der Tragstruktur (33) durch mindestens eine weitere Verbindung verbunden ist, **dadurch gekennzeichnet, dass** die mindestens eine weitere Verbindung eine formschlüssige Verbindung ist, die einen Rand (51, 52) der Schale (34), der in eine in einem Bauteil (41) an der Spitze (36) des Flügelprofils (32) gebildete Nut (59) passt, umfasst und eine Relativbewegung zwischen der Schale (34) und der Tragstruktur (33) in der Längsrichtung erlaubt und den Austritt des Kühlmediums (49) in den Heißgasweg erlaubt.

2. Modulares Blatt (30) oder modulare Schaufel (31) nach Anspruch 1, wobei die erste Verbindung zwischen der Schale (34) und der Tragstruktur (33) eine Schweißverbindung, eine hart gelötete Verbindung oder eine Verbindung durch Haltemittel ist.

3. Modulares Blatt (30) oder modulare Schaufel (31) nach Anspruch 1 oder 2, wobei die erste Verbindung zwischen der Schale (34) und der Tragstruktur (33) gasdicht ist.

4. Modulares Blatt (30) oder modulare Schaufel (31) nach Anspruch 1, wobei das Spitzenbauteil (41) ein Deckbandelement oder eine Spitzenkappe ist.

5. Modulares Blatt (30) oder modulare Schaufel (31) nach Anspruch 1, wobei die Nut (59) in das Spitzenbauteil (41) des Flügelprofils (32) gefräst ist.

6. Modulares Blatt (30) oder modulare Schaufel (31) nach Anspruch 1, wobei die äußere Oberfläche (38) der Tragstruktur (33) und die innere Oberfläche (39) der Schale (34) mit einer Anzahl von komplementären formschlüssigen Elementen zur seitlichen Befestigung der Schale (34) an der Tragstruktur (33) versehen sind.

7. Modulares Blatt (30) oder modulare Schaufel (31) nach Anspruch 6, wobei die komplementären formschlüssigen Elemente als Schwalbenschwanz konstruiert sind.

8. Modulares Blatt (30) oder modulare Schaufel (31) nach Anspruch 1, wobei das in den Spalt (48) geleitete Kühlmedium (49) auf der inneren Oberfläche (39) der Schale (34) auftrifft.

9. Modulares Blatt (30) oder modulare Schaufel (31) nach Anspruch 1, wobei die äußere Oberfläche (38) der Tragstruktur (33) und/oder die innere Oberfläche (39) der Schale (34) mit Verwirblern (58) zur Verbesserung der Wärmeübertragung ausgerüstet sind.

10. Modulares Blatt (30) oder modulare Schaufel (31) nach Anspruch 9, wobei die Verwirbler (58) Rippen oder Sockel sind.

11. Modulares Blatt (30) oder modulare Schaufel (31) nach Anspruch 9 oder 10, wobei einzelne Verwirbler (58) so konstruiert sind, dass sie die Schale (34) stützen.

## Revendications

1. Ailette (30) ou aube (31) modulaire d'une turbine à gaz qui comprend les composants modulaires suivants :
un élément de plate-forme (53) qui présente une surface plane ou galbée qui définit un niveau de plate-forme (56) et une ouverture traversante (66) à l'intérieur ; et
un déflecteur d'air (32), qui s'étend à travers l'élément de plate-forme (53) ;
dans lequel le déflecteur d'air (32) présente :
une structure porteuse (33) qui s'étend le long d'un axe longitudinal (55) du déflecteur d'air (32), qui présente une partie emplanture (35) destinée à la fixation d'un support d'ailette ou d'aube de la turbine à gaz, qui présente une partie bout (36), et qui présente au moins un passage intérieur (46), qui s'étend à partir de la partie emplanture (35) jusqu'à la partie bout (36) du déflecteur d'air (32), une enveloppe qui présente une forme aérodynamique (34) qui s'étend sur une distance (37) au-dessus de la structure porteuse (33) et qui définit le contour extérieur (40) du déflecteur d'air (32), un espace qui s'étend de manière longitudinale (48), défini entre la structure porteuse (33) et l'enveloppe (34) ;
un certain nombre de trous traversants (47) dans la structure porteuse (33) destinés à diriger un agent de refroidissement (49) à partir du passage intérieur (46) jusque dans l'espace (48) ;
l'enveloppe (34) étant jointe d'un seul tenant à ladite structure porteuse (33) par un premier joint dans une région qui se situe sous le niveau de plate-forme (56) de l'élément de plate-forme (53) ; et l'enveloppe (34) étant jointe à la structure porteuse (33) par un joint supplémentaire au moins, **caractérisée en ce que** ledit ou lesdits joints supplémentaires sont des joints qui présentent une forme ajustée, qui comprennent un bord (51, 52) de l'enveloppe (34) qui s'ajuste dans une rainure (59), formée dans un composant (41) au niveau du bout (36) du déflecteur d'air (32), ce qui permet un déplacement relatif dans la direction longitudinale entre l'enveloppe (34) et structure porteuse (33), et ce qui permet un écoulement de l'agent de refroidissement (49) dans le chemin des gaz chauds.

2. Ailette (30) ou aube (31) modulaire selon la revendication 1, dans laquelle le premier joint entre l'enveloppe (34) et la structure porteuse (33), est un joint soudé, un joint brasé ou un joint de retenue.

3. Ailette (30) ou aube (31) modulaire selon la revendication 1 ou la revendication 2, dans laquelle le premier joint entre l'enveloppe (34) et la structure porteuse (33), est étanche vis-à-vis des gaz.

4. Ailette (30) ou aube (31) modulaire selon la revendication 1, dans laquelle ledit composant de bout (41) est un élément d'enveloppe ou un capuchon de bout.

5. Ailette (30) ou aube (31) modulaire selon la revendication 1, dans laquelle la rainure (59) est usinée dans le composant de bout (41) du déflecteur d'air (32).

6. Ailette (30) ou aube (31) modulaire selon la revendication 1, dans laquelle la surface extérieure (38) de la structure porteuse (33) et la surface intérieure (39) de l'enveloppe (34), sont dotées d'un certain nombre d'éléments complémentaires qui présentent une forme ajustée, destinés à la fixation latérale de l'enveloppe (34) sur la structure porteuse (33).

7. Ailette (30) ou aube (31) modulaire selon la revendication 6, dans laquelle les éléments complémentaires qui présentent une forme ajustée, sont conçus sous la forme d'une queue d'aronde.

8. Ailette (30) ou aube (31) modulaire selon la revendication 1, dans laquelle l'agent de refroidissement (49), dirigé dans l'espace (48), impacte la surface intérieure (39) de l'enveloppe (34).

9. Ailette (30) ou aube (31) modulaire selon la revendication 1, dans laquelle la surface extérieure (38) de la structure porteuse (33) et / ou la surface intérieure (39) de l'enveloppe (34), sont dotées de générateurs de tourbillons (58) destinés à augmenter le transfert de chaleur.

10. Ailette (30) ou aube (31) modulaire selon la revendication 9, dans laquelle les générateurs de tourbillons (58) sont des nervures ou des socles.

11. Ailette (30) ou aube (31) modulaire selon la revendication 9 ou la revendication 10, dans laquelle les générateurs de tourbillons individuels (58) sont conçus de façon à fournir un support à l'enveloppe (34).
